# FASCICULE DE BREVET EUROPEEN

(11) **EP 2 244 970 B1**
(45) Date de publication et mention de la délivrance du brevet: **24.05.2017**
(21) Numéro de dépôt: 08864748.2
(22) Date de dépôt: 10.12.2008
(51) Int. Cl.: C01B 6/04, C01B 3/00, B82Y 30/00, C01B 32/20

(54) **MATÉRIAU DE STOCKAGE D'HYDROGÈNE À BASE D'HYDRURE DE MAGNÉSIUM**
WASSERSTOFFSPEICHERMATERIAL AUS MAGNESIUMHYDRID
HYDROGEN STORAGE MATERIAL MADE FROM MAGNESIUM HYDRIDE

(30) Priorité: 10.12.2007 FR 0759689
(43) Date de publication de la demande: 03.11.2010
(73) Titulaire: Centre National de la Recherche Scientifique (C.N.R.S.), 75016 Paris (FR); Université Grenoble Alpes, 38400 Saint-Martin-d'Hères (FR)
(72) Inventeur: DE RANGO, Patricia, F-38610 Gieres (FR); CHAISE, Albin, F-38600 Fontaine (FR); FRUCHART, Daniel, F-38130 Echirolles (FR); MIRAGLIA, Salvatore, F-38000 Grenoble (FR); OLIVES, Régis, F-66330 Cabestany (FR)
(74) Mandataire: Lavoix
(86) Numéro de dépôt international: PCT/FR2008/052264
(87) Numéro de publication internationale: WO 2009/080986

(56) Documents cités:
- WO-A-02/094712
- WO-A-2006/111005
- FR-A- 2 900 401
- US-A1- 2002 141 939
- US-A1- 2005 032 641
- RODRGUEZ SANCHEZ A ET AL: "Expanded graphite as heat transfer matrix in metal hydride beds" INTERNATIONAL JOURNAL OF HYDROGEN ENERGY, ELSEVIER SCIENCE PUBLISHERS B.V., BARKING, GB, vol. 28, no. 5, 1 mai 2003 (2003-05-01), pages 515-527, XP004411264 ISSN: 0360-3199
- SHANG C X ET AL: "Effect of carbon on hydrogen desorption and absorption of mechanically milled MgH2", JOURNAL OF POWER SOURCES, ELSEVIER SA, CH, vol. 129, no. 1, 15 April 2004 (2004-04-15), pages 73-80, XP004502233, ISSN: 0378-7753, DOI: 10.1016/J.JPOWSOUR.2003.11.013

## Description

La présente invention concerne les matériaux utilisés pour le stockage réversible d'hydrogène. Plus particulièrement, la présente invention concerne un matériau composite compact à base d'hydrure de magnésium pour le stockage d'hydrogène et un procédé pour sa préparation.

L'hydrogène est utilisé dans de nombreux domaines industriels, notamment à titre de combustible (par exemple dans des moteurs thermiques ou des piles à combustible), ou bien encore à titre de réactif (par exemple pour des réactions d'hydrogénation). Dans ce cadre, compte tenu de son volume à l'état gazeux et de son explosivité, il est souhaitable que l'hydrogène soit stocké sous une forme assurant un encombrement réduit et un confinement sécuritaire.

Une possibilité consiste à stocker l'hydrogène sous forme d'hydrures métalliques. Dans ce cas, l'hydrogène à stocker est mis en contact avec un métal ou un alliage métallique dans des conditions de pression et de température qui induisent une incorporation de l'hydrogène sous forme atomique dans le réseau cristallin (réaction d'absorption ou réaction de charge). Pour récupérer l'hydrogène ainsi stocké, on se place dans des conditions de plus faible pression et/ou de température plus élevée, qui favorisent la réaction inverse (réaction de désorption ou réaction de décharge). On peut déterminer une « capacité de stockage réversible », exprimée en pourcentage en masse, qui correspond à la quantité d'hydrogène maximale que peut décharger le matériau de stockage une fois qu'il a été chargé. Pour plus de détails concernant le stockage de l'hydrogène sous forme d'hydrure, on pourra se reporter à « Hydrogen in Intermetallic Compounds I et II », L. Schlapbach, Springer Verlag (1998).

L'hydrure de magnésium constitue un choix d'hydrure particulièrement intéressant. En effet, il présente une capacité de stockage de l'hydrogène élevée (7,6 % massique) et une densité volumétrique comparable à celle de l'hydrogène liquide. Par ailleurs, il est abondant, bon marché et totalement recyclable. De plus, le magnésium est plus stable que les hydrures ternaires conventionnels tels que le LaNi₅, ou encore phase de Laves, qui tendent à se décomposer progressivement au cours des cyclages sous hydrogène, diminuant ainsi la capacité de stockage.

A. Rodriguez Sanchez (Int. J. Hydrogen Energy 28, (2003), 515) rapporte l'utilisation de graphite expansé comme matrice de transfert de chaleur dans des lits d'hydrures métalliques (hydrures de nickel LaNi₅Hₓ et des hydrures fer-titane), notamment pour le stockage d'hydrogène.

Toutefois, il existe des différences significatives entre les hydrures métalliques tels que décrits A. Rodriguez Sanchez et l'hydrure de magnésium, qui est un hydrure chimique à comportement semi-conducteur ionovalent. Les hydrures métalliques sont essentiellement des hydrures d'insertion, l'atome d'hydrogène occupe des sites interstitiels « petits » (le diamètre moyen des sites interstitiels est d'environ 0,8 À). Ces sites existent dans les alliages ou métaux correspondant. La liaison M-H est de caractère métallique car les électrons de liaison de l'hydrogène de caractère s vont contribuer à la bande de conduction du métal (le métal est caractérisé par une conduction électronique). Les hydrures « non métalliques » ou ionocovalents sont essentiellement des semi-conducteurs. La bande de valence n'a pas un caractère s, mais plutôt un caractère p. Cette liaison présente un caractère ionique. Typiquement, le composé Mg₂H₂ est un hydrure chimique (ionocovalent donc non conducteur métallique). Ce n'est pas un hydrure d'insertion : alors que le magnésium métal possède une structure hexagonale, le composé MgH₂ présente une structure cubique. Les liaisons entre ions « métal » et l'ion hydrogène sont beaucoup plus grandes.

Cette différence a des conséquences pratiques car :
- la température d'hydruration est à température ambiante pour les hydrures métalliques, alors qu'elle avoisine 300°C pour le magnésium, et même plus pour d'autres hydrures chimiques ionocovalent.

Les hydrures métalliques sont soumis au phénomène de décrépitation après un certain nombre de cycle d'absorption/désorption d'hydrogène. La décrépitation est le phénomène de réduction de taille jusqu'à l'échelle du grain métallurgique par des fracturations qui résultent de contraintes mécaniques induites lors de l'hydruration, en raison de la différence entre la densité de l'hydrure métallique et celle du métal. Cette décrépitation peut être à l'origine d'une baisse des performances d'absorption/désorption d'hydrogène au bout d'un certain nombre de cycles. Ce phénomène de décrépitation n'est pas observé dans le cas de l'hydrure de magnésium. En effet, le magnésium est ductile et accommode par conséquent plus facilement les contraintes mécaniques induites par l'hydruration. De nombreux travaux de recherche sont actuellement menés pour optimiser les performances de l'hydrure de magnésium pour le stockage de l'hydrogène.

Cependant, la faible conductivité thermique de la poudre d'hydrure de magnésium, système non métallique ionocovalent, rend la gestion des flux thermiques délicate. En effet, la réaction d'hydruration est fortement exothermique et il convient d'évacuer rapidement la chaleur dégagée, afin de charger l'hydrogène dans un délai raisonnable. D'autre part, la réaction de désorption est fortement endothermique, et s'interrompt spontanément en l'absence de source de chaleur.

Par ailleurs, l'hydruration du magnésium s'accompagne d'une augmentation importante de volume de l'ordre de 30 %, ce qui engendre des tensions internes et provoque des contraintes mécaniques importantes sur les parois du réservoir.

Par ailleurs, l'hydrure de magnésium pulvérulent présente une faible capacité volumique de stockage et est difficile à manipuler.

D'importants travaux ont porté sur l'amélioration de la cinétique d'absorption et de désorption d'hydrogène du MgH₂.

Ainsi, la demande de brevet WO 2007 125 253 A1 décrit l'activation du MgH₂ par co-broyage avec un alliage de structure cubique centrée à base de titane, de vanadium et soit de chrome soit de manganèse. Les poudres obtenues présentent de très bonnes performances en terme de cinétique d'absorption et de désorption d'hydrogène, mais sont cependant très réactives et peuvent s'enflammer spontanément à l'air.

La demande de brevet WO 2006/111005 décrit un matériau composite pour le stockage de l'hydrogène comprenant :
- des particules de matériau actif, tel que le MgH₂,
- un liant, et
- éventuellement des additifs, par exemple des flocons de graphite.

Shang et al. (Journal of Power Sources, 139, 2004, 73-80) décrivent des matériaux de stockage d'hydrogène obtenus par mélange de MgH2 et de carbone graphite puis compaction.

Le but de la présente invention est de proposer un matériau pour le stockage d'hydrogène à base d'hydrure de magnésium qui ne présente pas les inconvénients cités, et notamment qui soit compact, manipulable sans précautions particulières, et présente de bonnes propriétés en termes de tenue mécanique, de conductivité thermique et de cinétiques d'absorption et de désorption d'hydrogène.

Selon l'invention, ce but est atteint par un matériau comprenant un mélange d'hydrure de magnésium et de graphite naturel expansé (GNE), sous forme compactée.

Ce matériau présente une porosité réduite, ce qui augmente sa capacité volumique de stockage d'hydrogène. Sa forme compacte lui confère une tenue mécanique qui facilite sa manipulation.

Par ailleurs, le graphite naturel expansé favorise la cohésion du matériau lequel possède une conductivité thermique radiale très supérieure à celle de la poudre de magnésium ou d'hydrure de magnésium.

Enfin, le composite est manipulable à l'air sans risque d'inflammation spontanée même lorsqu'il a été préparé avec de l'hydrure de magnésium activé.

Selon un premier aspect, l'invention propose un matériau compacté obtenu par le procédé selon l'invention et comprenant de l'hydrure de magnésium et du graphite naturel expansé.

Le terme « hydrure de magnésium » tel qu'utilisé ici couvre également, selon l'étape du procédé, le magnésium partiellement ou complètement chargé d'hydrogène.

Le terme « matériau compacté » tel qu'utilisé ici signifie un corps solide dont la masse volumique est significativement supérieure à celle des matières premières divisées respectives. Ce matériau est en particulier obtenu par compression du mélange de matières premières. Généralement, la masse volumique sera supérieure d'au moins 100% mais elle pourra atteindre 400% de celle des matières premières divisées.

Le terme « métal de transition » tel qu'utilisé ici vise les éléments chimiques possédant à l'état atomique une sous-couche d partiellement remplie ou qui forment au moins un ion avec une sous-couche d partiellement remplie. Particulièrement visés sont les métaux de transition V, Nb, Ti, Cr et Mn.

Il est supposé que le matériau ne contient pas ou très peu de composés résultant d'une réaction chimique. Il s'agit plutôt d'un matériau composite constitué d'une poudre d'hydrure de magnésium (MgH₂) et d'un « squelette » formé par le GNE sous forme de feuillets. Sous l'effet de la pression, les feuillets s'alignent dans le plan perpendiculaire à l'axe de compression.

L'hydrure de magnésium peut être notamment obtenu par une réaction d'hydruration incomplète. Avantageusement, la poudre d'hydrure de magnésium utilisée comporte moins de 10% en poids, de préférence moins de 5% en poids, de magnésium métallique. En effet, la poudre sera d'autant plus stable vis-à-vis de l'air que l'hydrure de magnésium sera parfaitement hydruré.

L'hydrure de magnésium est activé au préalable afin de présenter une cinétique d'absorption et de désorption d'hydrogène favorable. Cette activation est réalisée par co-broyage de l'hydrure de magnésium avec un métal de transition, un alliage de métaux de transition ou un oxyde de métal de transition préférablement introduits dans des proportions comprises entre 1 et 10% atomique par rapport au mélange, de préférence environ 5%.

Le co-broyage de l'hydrure de magnésium avec l'agent d'activation est réalisé en l'absence du graphite naturel expansé. En effet, le broyage du graphite naturel expansé aurait pour effet de détruire le « squelette » et les feuillets du GNE. Or, il est préférable que la structure du GNE sous forme de feuillets soit conservée pour conférer au matériau compacté final un caractère fortement anisotrope.

Particulièrement préféré est l'hydrure de magnésium activé selon l'enseignement de la demande déposée sous le numéro WO 2007 125 253 A1, par co-broyage avec un alliage de structure cubique centrée comprenant du titane, du vanadium et d'un métal de transition choisi parmi le chrome et le manganèse, préférablement introduit dans des proportions comprises entre 1 et 10% atomique par rapport au mélange.

L'hydrure de magnésium activé se présente avantageusement sous forme de poudre très fine, de granulométrie comprise entre 1 et 10 µm. Chaque grain de poudre est constitué d'une multitude de cristallites d'environ 10 à 20 nm. Après co-broyage avec l'agent d'activation, l'hydrure de magnésium activé présente ainsi une structure à l'échelle nanométrique qui favorise la diffusion de l'hydrogène entre les cristallites et qui, associée à l'effet de l'agent d'activation, permet d'atteindre des cinétiques d'absortion/désorption d'hydrogène très rapides.

Le graphite est selon l'invention un graphite naturel expansé (GNE). Le graphite naturel expansé est une forme de graphite modifié par traitements chimiques et thermiques. Le graphite est avantageux car il est hydrophobe, réfractaire, bon conducteur de chaleur

Le graphite naturel expansé est particulièrement efficace car il se présente sous forme de petits feuillets de taille millimétrique, ce qui lui confère un caractère fortement anisotrope, et ce qui favorise la conduction de la chaleur sur de grandes distances, à échelle des grains de magnésium.

Les particules de GNE se présentent avantageusement sous forme de vermicules de forme allongée, possédant un diamètre de l'ordre de 500 µm et une longueur de quelques millimètres.

Sous l'effet d'une compaction uniaxiale, les vermicules s'orientent sensiblement perpendiculairement à l'axe de compression. Ceci confère au matériau composite un comportement thermique fortement anisotrope, et favorise la conduction de la chaleur perpendiculairement à l'axe de compression.

Le matériau selon l'invention présente ainsi une conductivité thermique radiale très supérieure à celle obtenue avec un lit fluidisé de magnésium activé. Ceci permet une meilleure gestion des flux thermiques lors de l'opération d'hydruration exothermique, et donc une réduction importante du temps de rechargement en hydrogène.

La proportion de graphite naturel expansé dans la composition décrite n'est pas particulièrement limitée. En effet, il a été démontré que le matériau compacté selon l'invention est stable mécaniquement et peut être usiné, y compris avec des taux en GNE inférieurs ou égaux à 5% en poids, ce qui n'est pas le cas avec des mélanges d'hydrures métalliques de type LaNi₅Hₓ et des hydrures fer-titane.

De plus, le matériau compacté selon l'invention est homogène quelle que soit la proportion de GNE. L'homogénéité résulte d'un faible écart entre la densité de l'hydrure et celle du GNE. En effet, le GNE a une densité faible et l'hydrure de magnésium activé par un agent d'activation (métal de transition, un alliage de métaux de transition ou un oxyde de métal de transition) est très pulvérulent suite au co-broyage et a de ce fait une densité apparente plus proche de celle de GNE que celle des hydrures métalliques. A titre indicatif, la densité de l'hydrure de magnésium activé est environ trente fois plus faible que celle de LaNi₅Hₓ. Ainsi, la préparation de matériaux compacts de LaNi₅Hₓ/GNE est bien plus délicate et leur homogénéité est plus aléatoire.

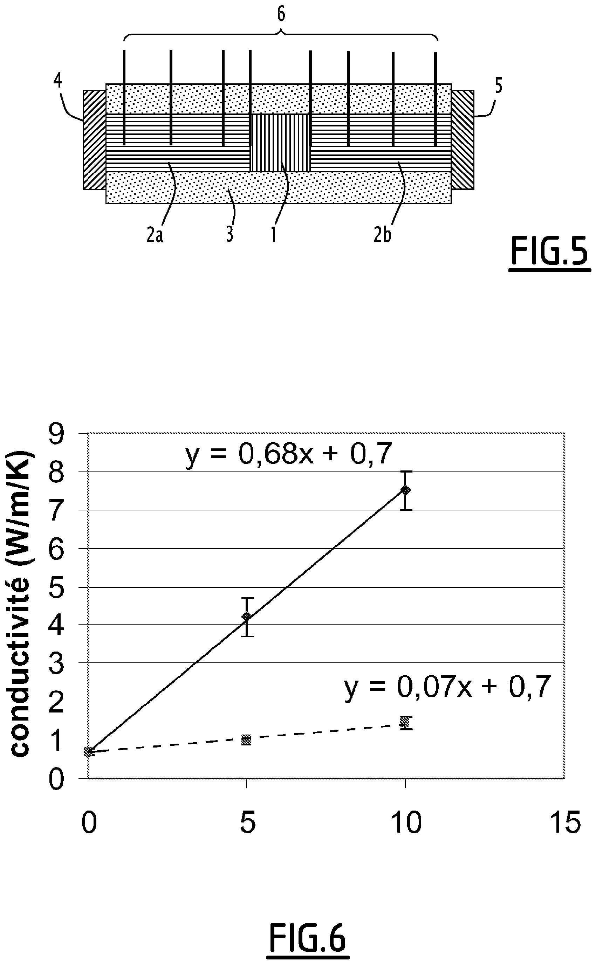

La proportion de graphite naturel expansé dans la composition décrite sera généralement choisie en fonction de la conductivité thermique souhaitée pour le matériau final. Son ajustement résulte d'un compromis entre l'augmentation de la conductivité thermique et la baisse de capacité massique d'absorption, le GNE n'absorbant a priori pas d'hydrogène chimiquement. Une teneur faible, de l'ordre de 1 à 10% en poids par rapport à la composition finale permet déjà d'augmenter de manière significative la conductivité thermique (voir figure 5).

Avantageusement, la composition selon l'invention comprend de préférence 5 à 10 % en poids de graphite naturel expansé.

Le matériau comprend de préférence 80 à 99% en poids d'hydrure de magnésium.

Selon un mode de réalisation préféré, le matériau consiste en hydrure de magnésium et GNE.

Le matériau est mis en forme par compaction.

Le matériau est mis sous une forme facilitant une compaction homogène, sous forme de pastille.

Le matériau proposé est de fabrication aisée, utilise des matières premières disponibles, est peu coûteux et ne nécessite pas d'équipement sophistiqué.

Aussi, selon un deuxième aspect, l'invention propose un procédé de préparation d'un matériau compacté comprenant de l'hydrure de magnésium et du graphite naturel expansé, comportant les étapes consistant à :
(i) mélanger un hydrure de magnésium ou magnésium pulvérulent avec un graphite naturel expansé; et
(ii) mettre en forme le mélange par compaction dans une pastilleuse.

Le procédé de préparation ci-dessus comporte au préalable une étape supplémentaire consistant à activer l'hydrure de magnésium ou le magnésium pulvérulent par co-broyage avec un agent d'activation choisi parmi un métal de transition, un mélange de métaux de transition, un oxyde de métal de transition et un alliage de métaux de transition. Ce procédé permet ainsi de préparer un matériau compacté comprenant de l'hydrure de magnésium activé et du graphite naturel expansé.

L'hydrure de magnésium utilisé pour la fabrication du matériau se présente sous forme de poudre, de préférence présentant une granulométrie comprise entre 1 et 10 µm.

Le mélange des poudres peut être réalisé de manière conventionnelle, par exemple dans un mélangeur. Il est de préférence réalisé à température ambiante, et à pression atmosphérique.

La compaction du mélange de poudres est réalisée dans une pastilleuse.

Avantageusement, le mélange et la compaction sont réalisés sous atmosphère contrôlée, notamment lorsque l'on utilise du magnésium activé pyrophorique.

La force exercée lors de la compaction est choisie notamment en fonction de la porosité désirée dans le matériau. A titre indicatif, une force de compression de l'ordre de 1 t/cm² s'est révélée appropriée pour l'obtention de pastilles de matériau présentant une porosité de l'ordre de 0,3.

La compaction permet d'augmenter la densité volumétrique de stockage de l'hydrogène par rapport à un lit fluidisé d'hydrure de magnésium et d'améliorer la tenue mécanique. En outre et de manière surprenante, le matériau ainsi obtenu n'est plus pyrophorique et peut donc être plus facilement manipulé.

Le matériau mis en forme peut être usiné ensuite, notamment pour présenter les dimensions adaptées au réservoir.

Les autres propriétés du matériau relatives au stockage de l'hydrogène telles que les cinétiques d'absorption et de désorption de l'hydrogène ne sont pas affectées de manière significative par la mise en forme du matériau.

Le matériau décrit est facilement manipulable, même lorsqu'il incorpore un hydrure de magnésium activé et présente une capacité volumique de stockage d'hydrogène améliorée.

Aussi, selon un troisième aspect, l'invention propose l'utilisation du matériau décrit pour le stockage d'hydrogène.

Selon un dernier aspect, l'invention propose enfin un procédé de stockage et déstockage d'hydrogène comportant les étapes consistant à :
(a) introduire un matériau décrit dans un réservoir d'hydrogène approprié ;
(b) mettre le matériau sous pression d"hydrogène dans des conditions de pression et de température permettant l'absorption de l'hydrogène dans le matériau; et
(c) désorber l'hydrogène du matériau dans des conditions de pression et de température correspondant à la désorption du matériau.

Avantageusement, l'énergie libérée par le chargement en hydrogène est évacuée par un échangeur de chaleur.

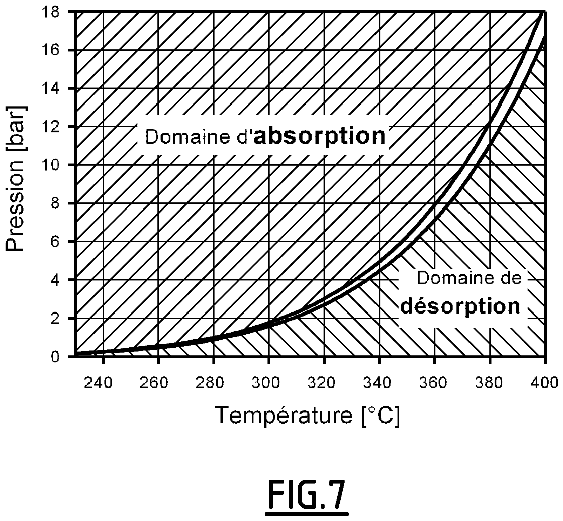

Les conditions de pression et de température peuvent être déterminées aisément à partir de la courbe d'équilibre de l'hydrure de magnésium (voir figure 7).

L'invention sera décrite plus en détail au moyen des exemples qui suivent et des figures, lesquelles montrent :
- Fig.1 :: une photographie d'une pastille obtenue selon l'exemple 1 ;
- Fig.2:: la densité mesurée et de la porosité correspondante de pastilles selon l'exemple 1 en fonction de la force de compression appliquée ;
- Fig.3 :: le volume d'hydrogène absorbé lors du chargement du réservoir rempli de poudre de MgH₂ et la température mesurée au centre et en périphérie du réservoir;
- Fig.4 :: le volume d'hydrogène absorbé lors du chargement du réservoir rempli de pastilles obtenues selon l'exemple 1 et la température mesurée au centre et en périphérie du réservoir ;
- Fig.5 :: schéma de la mesure de la conductivité thermique selon le principe de la barre divisée ;
- Fig.6 :: les conductivités thermiques radiale et axiale du matériau obtenu selon l'exemple 1 pour différentes teneurs en graphite.
- Fig.7 :: la courbe d'équilibre Mg-MgH₂ permettant de déterminer les conditions d'absorption et de désorption.

### EXEMPLE 1

### Préparation de pastilles de MaH₂ / GNE

Dans un mélangeur étanche adapté, placé dans une boîte à gants sous atmosphère contrôlée, on mélange soigneusement 47,5 g de poudre d'hydrure de magnésium activé de granulométrie moyenne de 1 à 10µm, (disponible auprès de MCP MG Serbien ou MCPHy Energy SA) avec 2,5 g de poudre de graphite naturel expansé (GNE, granulométrie moyenne se présentant sous la forme de particules d'une longueur de quelques millimètres (disponible auprès de SGL Technologies GmbH).

Le mélange de poudres (50 g), est ensuite versé dans la matrice d'une pastilleuse en acier trempé également placée en boîte à gants. La pastilleuse est sortie de la boîte à gants sous sachet hermétique, et placée sous une presse.

La poudre placée dans la pastilleuse est compactée par compression uniaxiale d'une intensité de l'ordre de 1t/cm² (10⁸ Pa).

On récupère des pastilles d'un matériau gris, compact, d'aspect proche de celui du graphite massif d'un diamètre de 8 cm, pouvant être manipulées à l'air libre pendant quelques minutes. Néanmoins, il est préférable de stocker les composites sous atmosphère contrôlée pour éviter tout risque d'échauffement et d'oxydation en surface.

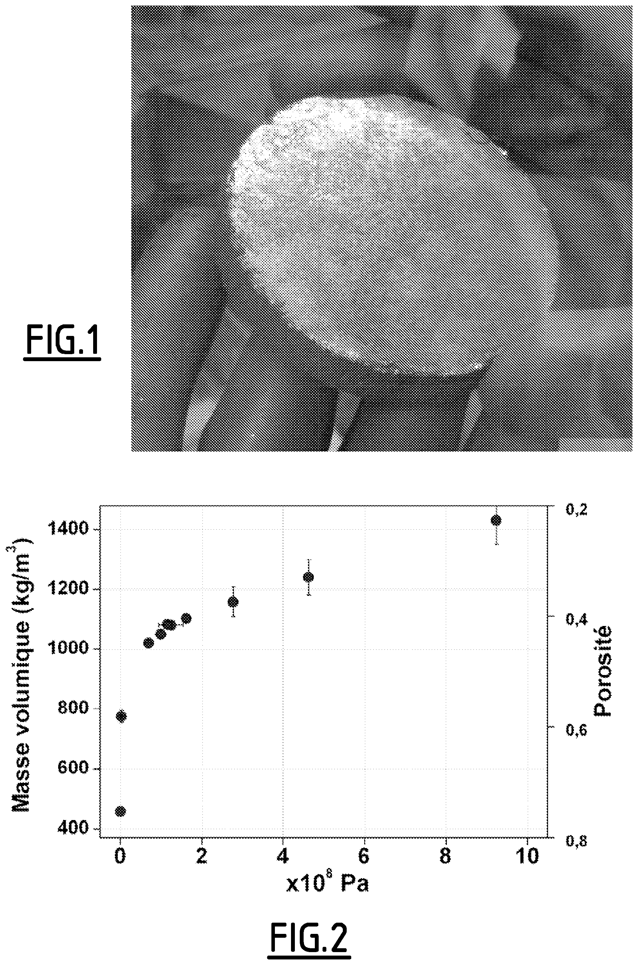

La densité du matériau dans les différentes pastilles obtenues a été calculée par pesée et mesure des dimensions. La porosité a été calculée à partir des densités théorique et mesurée. Les résultats sont montrés à la figure 1.

Les pastilles présentent une tenue mécanique et une stabilité à l'oxydation suffisante pour permettre leur manipulation aux fins de l'introduction dans le réservoir d'hydrogène dans des conditions normales, c'est-à-dire notamment en dehors de la boîte à gants.

Les pastilles obtenues présentent une tenue mécanique exceptionnelle. Il est ainsi possible de les usiner, par exemple pour ajuster le diamètre extérieur au diamètre du réservoir, ou pour percer des trous pour insérer des éléments chauffants et des thermocouples. De même, après des cyclages d'hydrogène répétés, on n'observe ni fissuration, ni accumulation de poudres fines au fond du réservoir.

La présence du GNE favorise la cohésion du matériau comprimé (figure 2). En effet, les pastilles préparées sans GNE sont plus fragiles et ne permettent pas un usinage ultérieur.

### EXEMPLE 2

### Tests d'application de MaH₂/ GNE et comparaison avec le MgH₂

Les propriétés dans l'application de stockage d'hydrogène du matériau obtenu à l'exemple 1 ont été évaluées et comparées à celles de l'hydrure de magnésium activé pulvérulent.

Le diamètre des pastilles MgH₂/ GNE obtenues à l'exemple 1 a été réduit de 8 cm à 7 cm par usinage. On a introduit 250g de ces pastilles dans un réservoir cylindrique en acier inoxydable de diamètre interne de 7 cm et d'un volume de 270 cm³. Le réservoir est muni de moyens de chauffage. Le réservoir a été ensuite chauffé à une température de 300°C et mis sous pression de 8 bars d'hydrogène.

Le volume d'hydrogène absorbé a été enregistré par débimètre pendant 3 heures. La température a été suivie au moyen de sondes placées au centre et à la périphérie du réservoir.

L'essai est réalisé dans les mêmes conditions expérimentales, sauf à remplacer les pastilles selon l'exemple 1 par 110 g de poudre d'hydrure de magnésium activée.

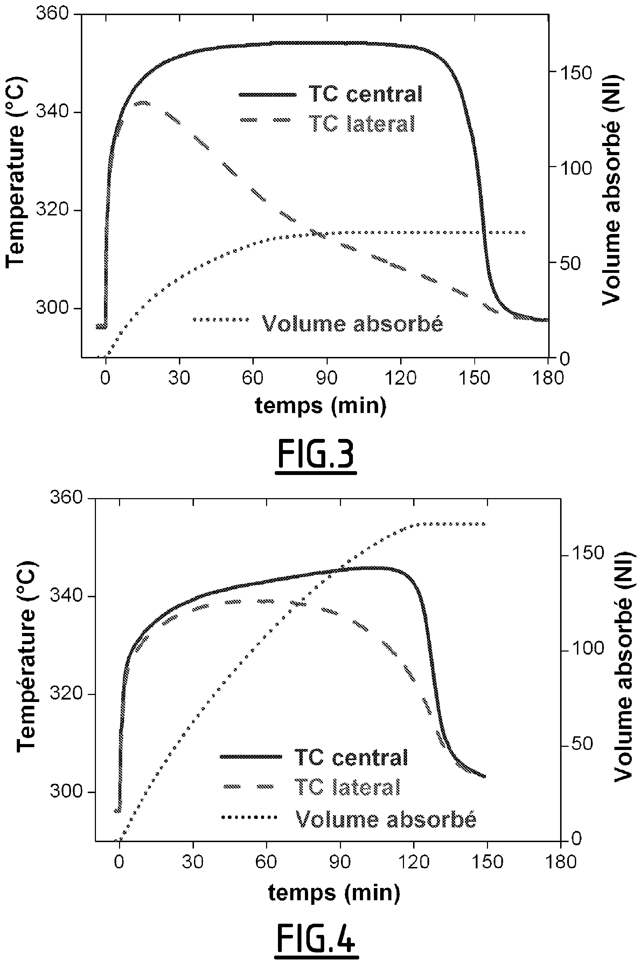

Les figures 3 et 4 montrent que le volume d'hydrogène absorbé passe de 65 NL avec la poudre à 170 NL avec les pastilles (Normaux Litres). La compression des poudres permet donc de plus que doubler la capacité volumique de stockage de l'hydrogène du matériau. La comparaison avec la figure 4 indique en outre que le chargement est plus rapide pour le matériau compacté, et ce alors que la masse du matériau et donc la quantité de chaleur à évacuer est multipliée par un facteur d'environ 2,5.

La comparaison des températures relevées au centre et à la périphérie du réservoir pour les pastilles (voir figure 4) et la poudre (voir figure 3) montre par ailleurs que la température est beaucoup plus homogène au sein du matériau selon l'invention.

Ces résultats démontrent que le matériau décrit permet d'améliorer fortement la conductivité thermique radiale et la capacité de stockage volumique du matériau de stockage d'hydrogène.

La conductivité thermique a été mesurée pour des échantillons préparés avec différentes teneurs en GNE. Les mesures ont été effectuées sur un banc de mesure en régime permanent conventionnel basé sur le principe de la barre divisée (voir figure 5). L'échantillon est positionné entre deux pièces étalon 2a, 2b et entouré d'isolant 3, le tout étant en contact de part et d'autre avec une plaque chaude 4 et une plaque froide 5. Des thermocouples 6 sont insérés dans les étalons et l'échantillon afin de relever la température en fonction de l'éloignement des plaques.

La température moyenne de l'échantillon lors des mesures est de l'ordre de 30°C. Trois compositions comprenant 0%, 5% et 10% (en poids de GNE respectivement) ont été testées. A cette fin, des « barrettes » ont été découpées dans le plan de la pastille (mesures radiales reportées en ligne continue sur la figure 6), et suivant l'axe de compaction (mesures axiales, en ligne discontinue).

Les résultats sont illustrés sur la figure 6 et indiquent que pour les teneurs étudiées, la conductivité thermique est proportionnelle à la teneur en GNE. On observe également une très forte anisotropie de comportement : la conductivité radiale augmente très rapidement avec la teneur en GNE, tandis que la conductivité axiale n'est que très peu affectée par la présence de GNE.

Par ailleurs, le matériau décrit présente une faible réactivité à l'air, ce qui rend sa manipulation beaucoup plus sûre et facilite notamment le chargement des réservoirs d'hydrure.

Sa très bonne tenue mécanique permet par ailleurs l'usinage des pièces pour les adapter à la géométrie des réservoirs, par exemple afin de prévoir le passage d'échangeurs thermiques. La tenue mécanique persiste même au cyclage sous hydrogène, ce qui permet d'éviter les problèmes de contrainte mécanique associés au tassement des poudres et/ou à la décrépitation.

## Revendications

1. Procédé de préparation d'un matériau compacté comprenant de l'hydrure de magnésium et du graphite naturel expansé, comportant les étapes consistant à :
activer un hydrure de magnésium ou un magnésium pulvérulent par co-broyage avec un métal de transition, un mélange de métaux de transition, un oxyde de métal de transition ou un alliage de métaux de transition, puis
(i) mélanger l'hydrure de magnésium activé ou magnésium pulvérulent activé avec un graphite naturel expansé pulvérulent ; et
(ii) mettre en forme le mélange par compaction dans une pastilleuse.

2. Procédé de préparation selon la revendication 1, dans lequel l'hydrure de magnésium est activé avec un alliage de structure cubique centrée à base de titane, de vanadium et d'un métal de transition choisi parmi le chrome et le manganèse.

3. Procédé selon l'une quelconque des revendications 1 à 2, dans lequel le matériau mis en forme est ensuite usiné.

4. Matériau compacté susceptible d'être obtenu par le procédé selon l'une quelconque des revendications 1 à 3.

5. Matériau selon la revendication 4, comprenant 80 à 99 % en poids d'hydrure de magnésium.

6. Matériau selon la revendication 4 ou 5, comprenant 1 à 20 % en poids de graphite.

7. Utilisation du matériau selon l'une des revendications 4 à 6 pour le stockage d'hydrogène.

8. Procédé de stockage et déstockage d'hydrogène comportant les étapes consistant à :
(a) introduire un matériau selon l'une des revendications 4 à 6 dans un réservoir d'hydrogène approprié ;
(b) mettre le matériau sous pression d'hydrogène dans des conditions de pression et de température permettant l'absorption de l'hydrogène dans le matériau; et
(c) désorber l'hydrogène du matériau dans des conditions de pression et de température permettant la désorption du matériau.

9. Procédé selon la revendication 8, dans lequel l'énergie libérée par le chargement en hydrogène est évacuée par un échangeur de chaleur.

## Patentansprüche

1. Verfahren zur Herstellung eines kompaktierten Materials, enthaltend ein Magnesiumhydrid und expandierten Naturgraphit, umfassend die folgenden Schritte:
Aktivieren eines Magnesiumhydrids oder eines pulverförmigen Magnesiums durch Vermahlen mit einem Übergangsmetall, einer Mischung aus Übergangsmetallen, einem Übergangsmetall-Oxid oder einer Legierung aus Übergangsmetallen, dann
(i) Mischen des aktivierten Magnesiumhydrids oder des aktivierten pulverförmigen Magnesiums mit einem pulverförmigen expandierten Naturgraphit; und
(ii) Formen der Mischung durch Kompaktierung in einer Tablettiervorrichtung.

2. Verfahren zur Herstellung nach Anspruch 1, wobei das Magnesiumhydrid mit einer Legierung mit zentrierter kubischer Struktur auf der Grundlage von Titan, Vanadium und eines Übergangsmetalls, ausgewählt aus Chrom und Mangan, aktiviert wird.

3. Verfahren nach einem der Ansprüche 1 bis 2, wobei das geformte Material anschließend bearbeitet wird.

4. Kompaktiertes Material, das durch das Verfahren nach einem beliebigen der Ansprüche 1 bis 3 erhalten werden kann.

5. Material nach Anspruch 4, umfassend 80 bis 99 Gew.% Magnesiumhydrid.

6. Material nach Anspruch 4 oder 5, umfassend 1 bis 20 Gew.% Graphit.

7. Verwendung des Materials nach einem der Ansprüche 4 bis 6 zur Einlagerung von Wasserstoff.

8. Verfahren zur Einlagern und zum Abbauen von Wasserstoff, umfassend die folgenden Schritte:
(a) Einführen eines Materials nach einem der Ansprüche 4 bis 6 in einen geeigneten Wasserstoffbehälter;
(b) Versetzen des Materials unter Wasserstoffdruck in Druck- und Temperaturbedingungen, die die Absorption des Wasserstoffs in das Material ermöglichen; und
(c) Desorbieren des Wasserstoffs des Materials unter Druck- und Temperaturbedingungen, die die Desorption des Materials ermöglichen.

9. Verfahren nach Anspruch 8, wobei die durch die Wasserstoffladung freigesetzte Energie durch einen Wärmetauscher abgeführt wird.

## Claims

1. A method for preparing a compacted material comprising magnesium hydride and expanded natural graphite, including the steps which consist in:
activating the magnesium hydride or the powdered magnesium by co-grinding with a transition metal, a mixture of transition metals, a transition metal oxide or an alloy of transition metals, then
(i) mixing the activated magnesium hydride or activated powdered magnesium with a powdered expanded natural graphite; and
(ii) shaping the mixture by compaction in a pelleting machine.

2. A method of preparation according to claim 1, wherein the magnesium hydride is activated with a centred cubic structure based on titanium, vanadium and a transition metal selected from chromium and manganese.

3. A method according to any one of claims 1 to 2, wherein the shaped material is then machined.

4. A compacted material obtainable by the method according to any one of claims 1 to 3.

5. The material according to claim 4, comprising from 80 to 99% by weight of magnesium hydride.

6. The material according to claim 4 or 5, comprising from 1 to 20% by weight of graphite.

7. Use of the material according to any one of claims 4 to 6 for hydrogen storage.

8. A method for hydrogen storage and release from storage including the steps which consist in:
(a) introducing a material according to any one of claims 4 to 6 into a suitable hydrogen tank;
(b) placing the material under hydrogen pressure in pressure and temperature conditions that enable the hydrogen to be absorbed by the material; and
(c) desorbing the hydrogen from the material in pressure and temperature conditions permitting the desorption of the material.

9. A method according to claim 8, wherein the energy released by charging with hydrogen is evacuated by a heat exchanger.
